# EUROPEAN PATENT SPECIFICATION

(11) **EP 1 543 945 B1**
(45) Date of publication and mention of the grant of the patent: **07.05.2008**
(21) Application number: 04078398.7
(22) Date of filing: 15.12.2004
(51) Int. Cl.: B32B 3/12, E04C 2/36

(54) **Extruded honeycombed panel with high mechanical strength**
Extrudierte Platte in Wabenbauweise mit hoher mechanischer Festigkeit
Panneau extrudé en nid d'abeilles à haute résistance mécanique

(30) Priority: 19.12.2003 IT MI20032533
(43) Date of publication of application: 22.06.2005
(73) Proprietor: Politec Polimeri Tecnici S.A., 6855 Stabio (CH)
(72) Inventor: Conterno, Cosimo, 6850 Mendrisio (CH)
(74) Representative: De Gregori, Antonella

(56) References cited:
- EP-A- 0 933 489
- DE-A1- 4 208 812
- US-A- 5 039 567
- US-A- 5 496 610

## Description

The present invention refers tc an extruded honeycombed panel with high mechanical strength, in particular for the field of construction.

Extruded honeycombed panels made from thermoplastic material are used to form roofs and/or buffer walls in the building industry, for example for prefabricated products, or in the agricultural field, for example for greenhouses.

The panels, generally but not exclusively made from polycarbonate, have a honeycombed structure with internal ribs extending longitudinally and rectilinearly, for example as disclosed in EP-A-0 933 489. Such a structure gives known panels excellent mechanical strength against stresses applied longitudinally, but insufficient mechanical strength against mechanical stresses applied transversally.

This has a great impact upon the installation costs of the panels, which, after being cut into suitable sized sheets, are assembled together through joining elements to form a wall, a roof or other.

Indeed, to avoid flexing in the transversal direction it is necessary to greatly limit the maximum size of the sheets between the joining elements.

From this there derives an increase in installation costs, a greater complexity of such constructions and a worse aesthetic result.

Document US 5,039,567, representing the closest state of the art of the present invention, discloses an assembled honeycombed panel having anisotropic flexing characteristics comprising two outer sheets thermal compression bonded with a core made of undulated strips, wherein adjacent undulated strips are in touch and bonded with each other.

Moreover, for some applications such as greenhouses, or in any case when it is desired to allow light pass into the structure formed from the panels, it is extremely important that there is optimised passage of light, in other words a good diffusion of light screening the direct passage of the sun's rays, through the panels, in this case obviously made from transparent material.

So to screen the sun's rays the panels are usually coated externally with pigments and additives contained in the mass of the material, which reduce the direct transmission of light whilst excessively penalising the diffusion factor.

The purpose of the present invention is that of making an extruded honeycombed panel with high mechanical strength both against stresses acting longitudinally and against stresses acting transversally.

Another purpose of the present invention is that of making a panel that ensures excellent passage of light into the enclosed areas.

Another purpose of the invention is that of making an extruded honeycombed panel that is particularly simple and functional, with low costs.

These purposes according to the present invention are accomplished by making an extruded honeycombed panel as outlined in claim 1.

Further characteristics are foreseen in the dependent claims.

Further characteristics and advantages of an extruded honeycombed panel according to the present invention shall become clearer from the following description, given as an example and not for limiting purposes, referring to the attached schematic drawings, in which:
- figures 1 and 2 are plan views of two possible embodiments of an extruded honeycombed panel with high mechanical strength according to the present invention;
- figures 3 to 5 schematically show three possible cross sections of a honeycombed panel according to the invention;
- figures 6 and 7 are perspective views of partially separated details of further extruded honeycombed panels according to the invention.

With reference to the figures, an extruded honeycombed panel 10 is shown, in particular for application as roofs and/or buffer walls in the construction industry, for example for prefabricated products or for greenhouses.

The honeycombed panel 10 made from thermoplastic material comprises two or more flat sheets 13 that are parallel to each other, spaced apart and connected by a plurality of ribs 14 that are incident with respect to such sheets 13.

The extruded honeycombed panels 10 can be made up of just two sheets 13 that define a layer or else they can comprise a greater number of overlapping layers.

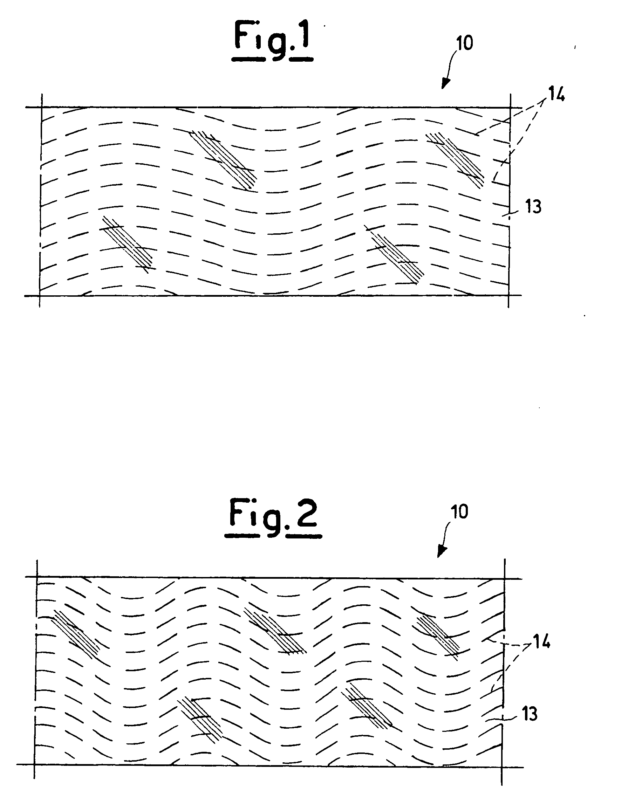

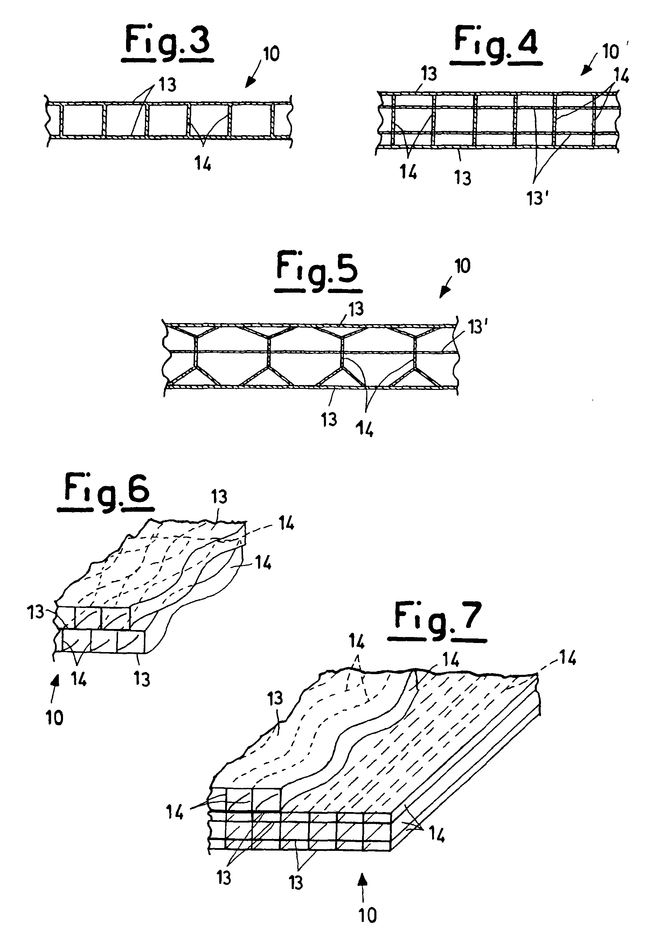

In the case of a single-layer panel, shown schematically in figure 3 in cross section, according to the invention all of the ribs 14, parallel to each other, have an undulating longitudinal extension that, as shown as an example in plan in figures 1 and 2, can be more or less accentuated.

Figure 4 shows, as an example, a cross section of a panel 10 made up of many layers, in which, according to a preferred embodiment, the sheets inside the panel 13' are thinner than the outer sheets 13.

Figure 5, on the other hand, shows a cross section of a multi-layer panel in which the ribs 14 are not incident with the outer sheets 13 at a right angle, but rather are arranged inclined with respect to them.

Figures 4 and 5 shows just a few examples of multi-layer panels, which nevertheless can have other structures, even more complex ones, that are known to the man skilled in the art.

In the multi-layer configurations the ribs 14 of a first layer of the panel 10 can, for example, have a different undulating longitudinal extension to the undulating longitudinal extension of the ribs 14 of a second layer, as shown in the separated detail of figure 6, in which the ribs of the two contiguous layers are also arranged in positions staggered from each other.

Moreover, in the multi-layer panels 10 according to the present invention it is sufficient for the ribs 14 of a single layer to have an undulating longitudinal extension.

As shown in figure 7, in a further embodiment of the panel 10 according to the present invention, the ribs 14 of a first layer can have undulating longitudinal extension and the ribs of the underlying layers can have a rectilinear longitudinal extension.

The arrangement in the panel 10 of at least one layer of ribs with undulating longitudinal extension increases the rigidity of the structure in the transversal direction to an increasing extent the more accentuated is the undulated profile of the ribs. In such a way, indeed, the ribs are more distributed on the surface avoiding the presence of longitudinal portions or channels without reinforcement ribs and subject to bending.

The honeycombed structure can be made from polycarbonate, or else other transparent or opaque synthetic materials, e.g. alloys of thermoplastic materials with similar chemical-physical characteristics to polycarbonate.

In the case of extruded honeycombed panels made from transparent materials, the presence of the ribs with undulating extension determines the diffusion of the light rays through the panel at the same time preventing it from crossing it directly.

Indeed, the sun's rays that strike the panel 10 at a rib 14 shall be diffused, whereas at the honeycomb, in other words in the portion between two ribs 14, direct crossing is possible. In the extruded honeycombed panel 10 according to the invention the ribs 14 are more distributed on the surface of the panel and the sun's rays shall never meet an entire longitudinal portion without ribs 14 to be crossed, but shall be diffused by them.

It is therefore advantageously possible to forgo applying an outer screen of pigments to the panels to screen the sun's rays, which substantially reduces the transmission of light.

The extruded honeycombed panel object of the present invention has the advantage of having improved the characteristics of mechanical strength in the transversal direction maintaining a simple and light structure.

The extruded honeycombed panel according to the present invention, made from transparent material advantageously has an excellent light diffusion factor.

When used as a heat exchanger the extruded honeycombed panel object of the present invention has the advantage of prolonging the flow times of the fluids promoting heat exchange.

The extruded honeycombed panel with high mechanical strength thus conceived is susceptible to numerous modifications and variants, which are all covered by the invention itself; moreover, all of the details can be replaced with technically equivalent elements. In practice, the materials used, as well as their sizes, can be whatever according to the technical requirements.

## Claims

1. Extruded honeycombed panel with high mechanical strength made from synthetic thermoplastic material comprising at least two flat sheets (13) that are parallel to each other, spaced apart and connected by a plurality of longitudinal ribs (14) that are incident with respect to said at least two sheets (13), said at least two sheets (13) being suitable for defining at least one layer of said panel, wherein ribs (14) belonging to at least one layer of said panel have an undulating longitudinal extension, **characterised in that** said ribs (14) are parallel to each other.

2. Panel according to claim 1, **characterised in that** it comprises three or more of said parallel flat sheets (13, 13') suitable for defining at least two layers of said panel carrying longitudinal ribs (14) that are incident with respect to said sheets (13, 13').

3. Panel according to claim 2, **characterised in that** said ribs (14) of a first layer of said panel have a different undulating longitudinal extension to the undulating longitudinal extension of ribs (14) of a second layer of said panel.

4. Panel according to claim 2, **characterised in that** said ribs (14) of a first layer are in staggered position with respect to said ribs (14) of a second layer.

5. Panel according to claim 1, **characterised in that** said synthetic thermoplastic material is transparent.

6. Panel according to claim 1, **characterised in that** said synthetic thermoplastic material is polycarbonate.

## Patentansprüche

1. Extrudierte bzw. stranggepresste wabenförmige bzw. zellenförmige Platte bzw. Füllwand mit hoher mechanischer Festigkeit, die aus synthetischem thermoplastischem Material bzw. thermoplastischem Kunststoffmaterial hergestellt wird, die wenigstens zwei flache bzw. ebene dünnen Lagen bzw. Tafeln (13) aufweist, die parallel zueinander sind, einzeln beabstandet bzw. mit Zwischenraum angeordnet sind und durch eine Mehrzahl von longitudinalen Rippen bzw. Längsrippen (14) verbunden sind, die in Bezug auf die wenigstens zwei dünnen Lagen bzw. Tafeln (13) einfallen bzw. verteilt sind, wobei die wenigstens zwei dünnen Lagen bzw. Tafeln (13) geeignet' sind, um wenigstens eine Schicht bzw. Lage der Platte bzw. Füllwand zu definieren, wobei Rippen (14), die zu wenigstens einer Schicht bzw. Lage der Platte bzw. Füllwand gehören, eine wellenförmige bzw, unebene. longitudinale Erstreckung bzw. Längserstreckung haben, **dadurch gekennzeichnet, dass** die Rippen (14) parallel zueinander sind.

2. Platte bzw. Füllwand gemäß Anspruch 1, **dadurch gekennzeichnet, dass** sie drei oder mehr der parallelen flachen bzw. ebenen dünnen Lagen bzw. Tafeln (13, 13') aufweist, die zum Definieren von wenigstens zwei Schichten bzw. Lagen von der Platte bzw. Füllwand geeignet sind, die longitudinale Rippen bzw, Längsrippen (14) tragen, die in Bezug auf die dünnen Lagen bzw. Tafeln (13, 13') einfallen bzw. verteilt sind.

3. Platte bzw. Füllwand gemäß Anspruch 2, **dadurch gekennzeichnet, dass** die Rippen (14) von einer ersten Schicht bzw. Lage der Platte bzw. Füllwand eine unterschiedliche wellenförmige bzw. unebene longitudinale Erstreckung bzw, Längserstreckung zu der wellenförmigen bzw. unebenen longitudinalen Erstreckung bzw. Längserstreckung von Rippen (14) von einer zweiten Schicht bzw. Lage der Platte bzw. der Füllwand haben.

4. Platte bzw. Füllwand gemäß Anspruch 2, **dadurch gekennzeichnet, dass** die Rippen (14) von einer ersten Schicht bzw. Lage in versetzt angeordneter Position in Bezug auf die Rippen (14) von einer zweiten Schicht bzw. Lage sind.

5. Platte bzw. Füllwand gemäß Anspruch 1, **dadurch gekennzeichnet, dass** das synthetische thermoplastische Material bzw, thermoplastische Kunststoffmaterial transparent ist.

6. Platte bzw. Füllwand gemäß Anspruch 1, **dadurch gekennzeichnet, dass** das synthetische thermoplastische Material bzw. thermoplastische Kunststoffmaterial Polycarbonat ist.

## Revendications

1. Panneau en nid d'abeilles extrudé avec une résistance mécanique importante, réalisé à partir d'un matériau thermoplastique comprenant au moins deux feuilles plates (13) qui sont parallèles entre elles, espacées et raccordées par une pluralité de nervures longitudinales (14) qui sont incidentes par rapport auxdites au moins deux feuilles (13), lesdites au moins deux feuilles (13) étant appropriées pour définir au moins une couche dudit panneau, dans lequel les nervures (14) appartenant à au moins une couche dudit panneau ont une extension longitudinale ondulée, **caractérisé en ce que** lesdites nervures (14) sont parallèles entre elles.

2. Panneau selon la revendication 1, **caractérisé en ce qu'**il comprend trois ou plusieurs desdites feuilles plates parallèles (13, 13') appropriées pour définir au moins deux couches dudit panneau supportant les nervures longitudinales (14) qui sont incidentes par rapport auxdites feuilles (13, 13').

3. Panneau selon la revendication 2, **caractérisé en ce que** lesdites nervures (14) d'une première couche dudit panneau ont une extension longitudinale d'ondulation différente par rapport à l'extension longitudinale d'ondulation des nervures (14) d'une seconde couche dudit panneau.

4. Panneau selon la revendication 2, **caractérisé en ce que** lesdites nervures (14) d'une première couche sont dans une position en décalage par rapport auxdites nervures (14) d'une seconde couche.

5. Panneau selon la revendication 1, **caractérisé en ce que** ledit matériau thermoplastique synthétique est transparent.

6. Panneau selon la revendication 1, **caractérisé en ce que** ledit matériau thermoplastique synthétique est du polycarbonate.
